# EUROPEAN PATENT SPECIFICATION

(11) **EP 0 972 479 B1**
(45) Date of publication and mention of the grant of the patent: **12.11.2003**
(21) Application number: 99610038.4
(22) Date of filing: 08.07.1999
(51) Int. Cl.: A47J 27/17

(54) **Boiling and braising vessel**
Wasserkochgerät und Bratpfanne
Bouilloire et cuve à braiser

(30) Priority: 08.07.1998 DK 90698
(43) Date of publication of application: 19.01.2000
(73) Proprietor: Joni Foodline A/S, 5330 Munkebo (DK)
(72) Inventor: Mogens, Jorgensen, 24955 Harrislee (DE)
(74) Representative: Larsen, Hans Ole

(56) References cited:
- EP-A- 0 788 754
- CH-A- 292 015
- DE-C- 599 815
- US-A- 3 739 710
- US-A- 3 823 307
- US-A- 5 167 216

## Description

The invention concerns a boiling or braising vessel consisting of an outer container and an inner container which together form a space between them, said space being intended to be filled with a heating medium, preferably water, for the heating of the inner container, the outer container having one or more depressions forming a steam chamber.

Boiling or braising vessels for professional use are in this connection permanently installed boiling or braising vessels, the contents of which are in the order of 40 to 600 litres. In order to heat such a vessel in an economic and effective manner, these types of vessels are heated by means of steam. Normally, boiling vessels of this type are configured with an inner container which is surrounded by a larger outer container. The space between these two containers is intended to be filled with steam. The steam is developed in a steam generator where the water is heated by means of electrical heating elements, which can be resistor elements or electrodes. The heating elements must necessarily be covered by water, but without the level of the water reaching up to the bottom of the inner vessel, in that the surface will thus not be free to receive and transfer the amount of heat from the steam.

The steam generator can be an independent unit, or a chamber which connects with the outer container via a passage in the container as disclosed in US 3,739,710, US 5,167,216 and CH 292015, or it can be an integral part of the outer container as disclosed in DE 599815. It can also be decided to mount the heating elements directly in the bottom of the outer container as disclosed in US 3,823,307, so that the space between the two containers in itself constitutes a steam chamber.

The way in which the boiling vessel functions is that the water around the heating elements is brought to the boil, whereby the steam rises up around the inner container and condenses on the surface of this container while emitting heat. Thereafter, the condensate runs down into the water around the heating elements and is brought to the boil again. During normal operation, the pressure in the steam jacket is between 0.5 and 1.5 bar.

A boiling vessel becomes functional once the water around the heating elements is brought to the boil. During the start phase, the amount of heat which is bound in the water around the heating elements will be lost when the apparatus is switched off again. This means that the greater the amount of water that exists around and over the heating elements, the greater the loss which occurs here, and correspondingly it will take a longer time to heat the vessel to its functional condition.

Since boiling vessels of this type are normally dimensioned to be able to handle the maximum occurring amounts of food, this means that they are often used with 50 - 70% filling, and the disadvantageous aspects of an inappropriate construction hereby manifest themselves to an even greater degree.

Over recent years, the demands for more energy-saving constructions where boiling vessels are concerned have increased considerably. Similarly, the requirements concerning integrated stirring elements in the vessels and quicker heating have increased, the reason being that in this way working processes are saved and work procedures are made easier by reducing the amount of physical work and energy is saved.

The most common methods of achieving an acceptable strength in the construction of an outer container for a boiling vessel are either to configure the bottom with a reversed dome shape, i.e. that the bottom is curved downwards, which provides good strength but makes the construction expensive, or to configure the bottom as a straight bottom with a great material thickness, whereby a relatively cheap construction is achieved. However, the latter solution suffers the considerable disadvantage that due to the space in height required by the heating elements, an extra large amount of water has to be heated, which herewith involves unnecessary costs.

In order to avoid these disadvantages, a boiling or braising vessel according to the invention can be configured in such a manner that the bottom of the outer container is built up of a number of plane surfaces, which in a simple manner are produced by the bending of a plate material, or produced by the joining together of several plate pieces, for example by welding, or which can be produced by a combination of both.

By configuring the bottom of the outer container according to the invention, several advantages are achieved. Due to the depressions, the plate comprising the bottom assumes considerably greater strength, whereby the necessary material thickness is substantially reduced.

In the following, reference is made to the drawing, where
- fig. 1: shows a boiling vessel with inner container with a domed bottom and an outer container with a partly-domed bottom, seen in section I-I in fig. 2,
- fig. 2: shows the boiling vessel seen from below,
- fig. 3: shows a boiling vessel with inner and outer containers both with domed bottoms, and with a separate steam chamber, seen in section III-III in fig. 4,
- fig. 4: shows the boiling vessel with separate steam chamber seen from below,
- fig. 5: shows a boiling vessel with inner and outer containers both with domed bottoms, seen in section V-V in fig. 6,
- fig. 6: shows the boiling vessel seen from below,
- fig. 7: shows a boiling vessel with an inner container with domed bottom and an outer container with a plane bottom, seen in section VII-VII in fig. 8,
- fig. 8: shows the boiling vessel seen from below,
- fig. 9: shows a boiling vessel with inner and outer containers both with domed bottoms, where a part of the bottom of the outer container comprises a depression which is shaped substantially as part of a cylinder jacket, seen in section IX-IX in fig. 10,
- fig. 10: shows the boiling vessel seen from below,
- fig. 11: shows a boiling vessel with inner container with a domed bottom, and where the bottom of the outer container is configured with of a pair of depressions with circular sections, between which there is placed a stirring element, seen in section XI-XI in fig. 12,
- fig. 12: shows the boiling vessel seen from below,
- fig. 13: shows a boiling vessel with inner container with domed bottom, and where the bottom of the outer container is configured with a single depression with circular section, and with a stirring element placed under the bottom at the side of the depression, seen in section XIII-XIII in fig. 14,
- fig. 14: shows the boiling vessel seen from below,
- fig. 15: shows a boiling vessel with inner container with a domed bottom, and where the bottom of the outer container is configured in a stepped-down manner, seen in section XV-XV in fig. 16,
- fig. 16: shows the boiling vessel seen from below,
- fig. 17: shows a boiling vessel with inner container with domed bottom, and where the bottom of the outer container is configured in a stepped-down manner, seen in section XVII-XVII in fig. 18, and
- fig. 18: shows the boiling vessel seen from below.

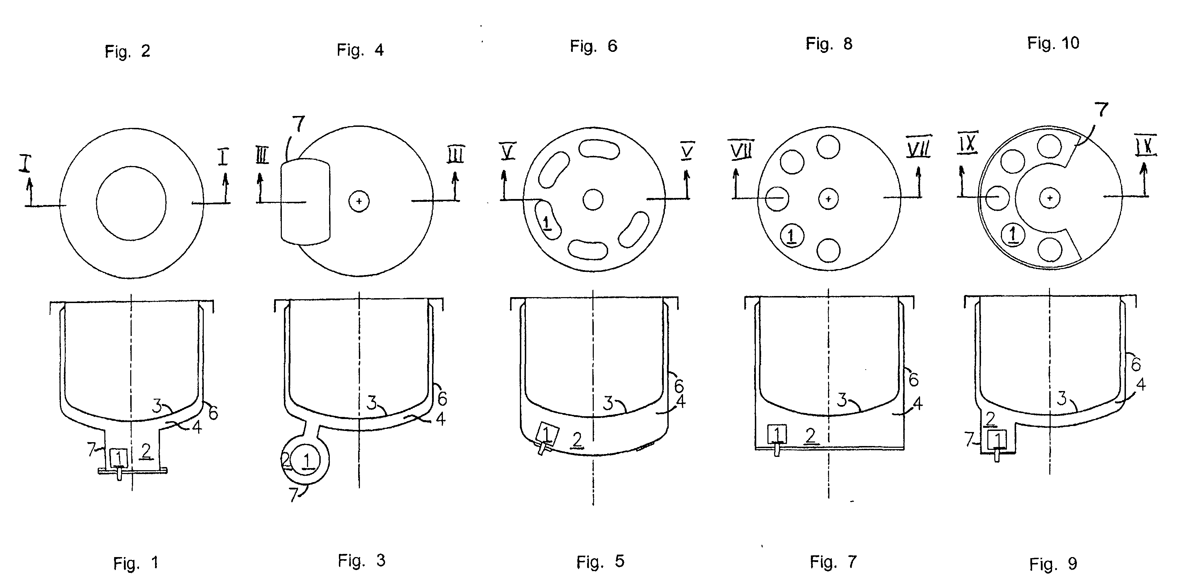

### Different solutions of state of prior art are shown in figures 1-10

The heating in a so-called boiling or braising vessel is effected by a heating element 1 heating an amount of water 2 which lies between an inner container 3 and a larger outer container 6. A steam jacket 4, which consists of the space 4 between the two containers 3 and 6, extends upwards almost to the upper edge of the boiling vessel, so that the steam can transfer its heat to the inner container 3 over as great a surface as possible. The steam is developed in depressions 7 formed in the bottom of the outer container 6, where the water 2 is heated by heating elements 1 which, for example, can be resistor elements, electrodes or similar means or sources of heat. The heating elements 1 must necessarily be covered by the water 2, but without the level of the water becoming so high that it reaches up to the bottom of the inner container 3, in that the surface of the bottom will thus not be free to receive the heating effect of the steam.

The way in which the vessel functions is that the water 2 around the heating elements 1 is brought to the boil, whereby steam is generated. The steam rises upwards around the inner container 3 and condenses on the surface of this container 3 during the transfer of heat, after which the condensate runs down into the water 2 around the heating elements 1 and is brought to the boil again.

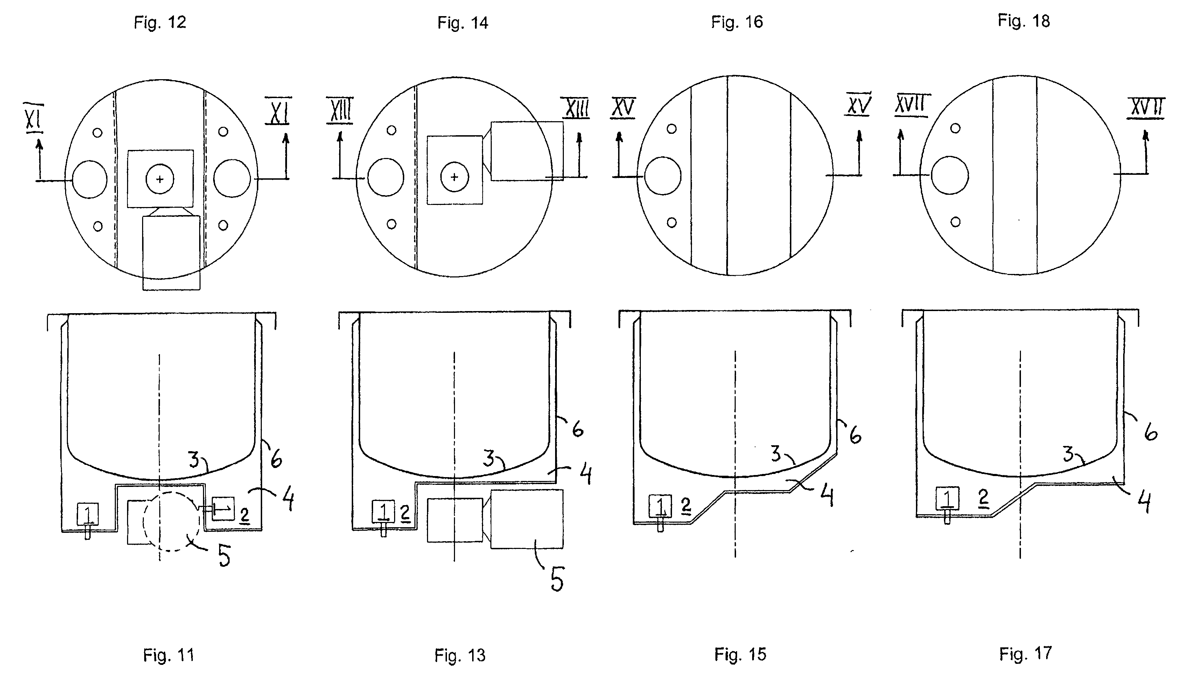

Figures 11-18 shows different solutions to the forming of boiling or braising vessels according to the invention.

In the vessel according to the invention, the bottom of the outer container 6 is built up of a plate which comprises a number of plane surfaces which are produced in a simple manner by the bending-out of a plate, or formed by the joining together of several plates, e.g. by welding, or by a combination of both. There is hereby achieved a simple construction with a considerable strength, in that the bottom does not extend in one and the same plane. These depressions form one or more "chambers" 7 which are ideal for use as steam chambers, in that these chambers 7 can easily be configured to contain a specific volume for the boiling vessel. Moreover, it is possible in a simple manner to mount one or more heating elements 1 in both the horizontal and the vertical position (see fig. 11), in that the elements 1 will be able to be mounted on plane surfaces. A driving device 5 for a stirring element can be placed at the side of a bend or between two bends so that its construction height does not increase the total height of the vessel.

## Claims

1. Boiling or braising vessel consisting of an outer container (6) and an inner container (3) which together form a space (4) between them, said space (4) being intended for filling with a heating medium (2), preferably water, for the heating of the inner container (3), the outer container having one or more depressions forming a steam chamber (7) **characterized in that** the bottom part of the outer container (6) is composed by one or more plates consisting of a number of plane surfaces in the formation of one or more restricted steam chambers (7).

2. Boiling or braising vessel according to claim 1, **characterized in that** one or more heating elements (1) can substantially be placed in both horizontal and vertical positions against one or more of the bottom parts which constitute the bottom of the outer container (6).

3. Boiling or braising vessel according to claim 1 and 2, **characterized in that** the driving device (5) for a stirring element is placed in an area close to the vertical centre axis of the boiling or braising vessel.

4. Boiling or braising vessel according to claims 1-3, **characterized in that** the plate is bent in the desired shape for the formation of steam chambers (7).

5. Boiling or braising vessel according to claims 1-3, **characterized in that** the plates which constitute the bottom of the outer container (6) are joined together by means of a permanent, tight connection.

## Patentansprüche

1. Koch- oder Schmorgefäß, das aus einem äußeren Behälter (6) und einem inneren Behälter (3) besteht, die einen Raum (4) dazwischen bilden, wobei der Raum (4) dazu bestimmt ist, mit einem Heizmedium (2), vorzugsweise Wasser, zum Erhitzen des inneren Behälters (3) gefüllt zu werden, und der äußere Behälter eine oder mehrere Vertiefungen aufweist, die eine Dampfkammer (7) bilden, **dadurch gekennzeichnet, dass** der untere Teil des äußeren Behälters (6) bei der Ausbildung einer oder mehrerer abgegrenzter Dampfkammem (7) durch eine oder mehrere Platten gebildet wird, die aus einer Anzahl planer Flächen bestehen.

2. Koch- oder Schmorgefäß nach Anspruch 1, **dadurch gekennzeichnet, dass** ein oder mehrere Heizelemente (1) im Wesentlichen sowohl an horizontalen als auch vertikalen Positionen an einem oder mehreren der unteren Teile angeordnet werden können, die den unteren Teil des äußeren Behälters (6) bilden.

3. Koch- oder Schmorgefäß nach Anspruch 1 und 2, **dadurch gekennzeichnet, dass** die Antriebsvorrichtung (5) für ein Rührelement in einem Bereich nahe an der vertikalen Mittelachse des Koch- oder Schmorgefäßes angeordnet ist.

4. Koch- oder Schmorgefäß nach den Ansprüchen 1-3, **dadurch gekennzeichnet, dass** die Platte in der gewünschten Form für die Ausbildung von Dampfkammem (7) gebogen ist.

5. Koch- oder Schmorgefäß nach Anspruch 1-3, **dadurch gekennzeichnet, dass** die Platten, die den unteren Teil des äußeren Behälters (6) bilden, mittels einer dauerhaften, festen Verbindung miteinander verbunden sind.

## Revendications

1. Bouilloire ou cuve à braiser constituée d'un conteneur extérieur (6) et d'un conteneur intérieur (3) formant ensemble un espace (4) entre eux, ledit espace (4) étant destiné à être rempli d'un milieu de chauffage (2), de préférence d'eau, pour le chauffage du conteneur intérieur (3), le conteneur extérieur présentant un ou plusieurs évidements formant une chambre à vapeur (7) **caractérisée en ce que** la partie inférieure du conteneur extérieur (6) se compose d'une ou plusieurs plaques constituées d'un certain nombre de surfaces planes dans la formation d'une ou plusieurs chambres à vapeur délimitées (7).

2. Bouilloire ou cuve à braiser selon la revendication 1, **caractérisée en ce qu'**un ou plusieurs éléments de chauffage (1) peuvent être sensiblement placés en position verticale et en position horizontale contre une ou plusieurs des parties de fond constituant le fond du conteneur extérieur (6).

3. Bouilloire ou cuve à braiser selon les revendications 1 et 2, **caractérisée en ce que** le dispositif d'entraînement (5) pour un élément d'agitation est placé dans une zone proche de l'axe central vertical de la bouilloire ou cuve à braiser.

4. Bouilloire ou cuve à braiser selon les revendications 1 à 3, **caractérisée en ce que** la plaque est pliée dans la forme souhaitée pour la formation de chambres à vapeur (7).

5. Bouilloire ou cuve à braiser selon les revendications 1 à 3, **caractérisée en ce que** les plaques qui constituent le fond du conteneur extérieur (6) sont jointes au moyen d'un raccordement hermétique permanent.
